# EUROPÄISCHE PATENTSCHRIFT

(11) **EP 0 665 445 B1**
(45) Veröffentlichungstag und Bekanntmachung des Hinweises auf die Patenterteilung: **02.06.1999**
(21) Anmeldenummer: 94117429.4
(22) Anmeldetag: 04.11.1994
(51) Int. Cl.: G01S 7/48, F41G 7/22

(54) **Einrichtung zur Abwehr eines angreifenden Flugkörpers**
Apparatus for defence against an attacking missile
Dispositif de défense contre un missile agresseur

(30) Priorität: 31.01.1994 DE 4402855; 31.08.1994 DE 4430830
(43) Veröffentlichungstag der Anmeldung: 02.08.1995
(73) Patentinhaber: Diehl Stiftung & Co., 90478 Nürnberg (DE)
(72) Erfinder: Warm, Berndt, Dr.-Ing., D-90480 Nürnberg (DE); Wittmer, Detlev, Dr.-Ing., D-91207 Lauf (DE); Noll, Matthias, Dipl.-Ing., D-90542 Eckental (DE)

(56) Entgegenhaltungen:
- FR-A- 2 318 453
- FR-A- 2 689 252
- PATENT ABSTRACTS OF JAPAN vol. 16, no. 311 (M-1277) 8. Juli 1992 & JP-A-04 086 499 (MITSUBISHI HEAVY INDUSTRIES LIMITED)

## Beschreibung

Die Erfindung betrifft eine Einrichtung gemäß dem Oberbegriff des Anspruches 1.

Eine derartige Einrichtung ist aus der FR-A-23 18 453 bekannt. Sie beruht darauf, an Bord eines zu schützenden Flugzeuges mittels eines Radarsystemes die autarke Annäherung eines mit Infrarot-Suchkopfsteuerung ausgestatteten feindlichen Flugkörpers zu entdecken und dann einen Laserstrahl als Meßstrahl auf dessen Sensor zu richten, um über Sensorreflektionen dessen Retikelfrequenz zu erfassen. Mit dieser Information wird eine Falschinformation erzeugt und vom Flugzeug abgestrahlt, die eine abgelegene Scheinzielposition beinhaltet und dadurch den angreifenden Flugkörper vom zu schützenden Flugzeug als dem ursprünglich anvisierten Ziel ablenkt.

Eine vergleichbare Ablenkung des Angreifers erfolgt bei der Einrichtung, die aus den Patent Abstracts of Japan vol. 16 No. 311 (M-1277) vom 08.07.1992 & JP-A 04 086 499 bekannt ist, durch Abhängen eines Kugelspiegels aus dem zu schützenden Flugzeug, mit Bestrahlung des angreifenden Flugkörpers vorn Flugzeug aus auf dem Umweg über diesen Kugelspiegel, der daraufhin anstelle des eigentlichen Zieles vom Flugkörper angesteuert wird.

Optronische Suchköpfe in abzuwehrenden Angriffsflugkörpern können in Bereichen des elektromagnetischen Strahlungsspektrums vom Ultraviolett bis zum Infrarot arbeiten Diesbezüglich ist es auch bekannt (Zeitschrift PM, Heft 7/1988, Seiten 48 bis 57, insbesondere 2. Absatz der rechten Spalte von Seite 50), den Suchkopf eines angreifenden Luftziel-Flugkörpers durch das Ausbringen sehr heller und heißer Leuchtkörper (sog. Flares) vom bedrohten Fahrzeug aus zu blenden bzw. abzulenken. Moderne Flugkörper-Zielverfolgungseinrichtungen sind aber schon mit Sensoren zur Unterscheidung zwischen Flares und Zielen ausgestattet, z.B. durch eine Zielumriß-Bildverarbeitung. Sie lassen sich deshalb durch punktuelle Wärmequellen kaum noch ablenken. Das gilt entsprechend für Aufhell-Strahlquellen zur Irritation von UV-Suchköpfen (vgl. DE-PS 41 07 533).

Aus der DE-OS 36 23 808 ist es bekannt, einen Hochenergie-Laserstrahl über einen Nachführregler und eine adaptive Optik zum Optimieren der Energieverteilung über dem Strahlquerschnitt auch dann auf einen einmal erfaßten Zielpunkt zu halten, wenn sich das Ziel bewegt oder wenn dessen für die Nachführregelung ausgenutzte Reflexion aufgrund der gewünschten Zerstörung des Materials im Zielpunkt nachläßt. Ein derartiges System erscheint gut geeignet für stationäre oder jedenfalls landgebundene Laser im Einsatz gegen Flugzeuge und große Flugkörper; aber um einen Angriff von Flugkörpern gegen See- oder gar Luftfahrzeuge abzuwehren, wäre es nicht realistisch, mit solchen Systemen etwa Transportflugzeuge auszustatten, die kurzfristig zu humanitären Zwecken oder zur Versorgung von Krisenreaktionskräften eingesetzt werden und dann militärisch unaufgeklärtes Gelände überfliegen müssen, aus dem heraus sie, durch mit modernen kleinkalibrigen Flugabwehr-Flugkörpern ausgestattete Partisanen bzw. Rebellen, überaus gefährdet sind.

In Erkenntnis dieser Gegebenheiten liegt vorliegender Erfindung die technische Problematik zugrunde, eine wirksame Abwehreinrichtung zu schaffen, mit der potentiell gefährdete Fahrzeuge unproblematisch nachrüstbar sind, um sich der Bedrohung durch Suchkopf-gesteuerte Flugkörper zu erwehren.

Diese Aufgabe ist erfindungsgemäß im wesentlich dadurch gelöst, daß die gattungsgemäße Abwehreinrichtung gemäß dem Kennzeichnungsteil des Hauptanspruches ausgelegt ist.

Nach dieser Lösung wird das zu schützende Fahrzeug mit einer vergleichsweise kleinbauenden Laserquelle ausgestattet, deren Laserstrahl(en) über einen rundumsuchenden Warnsensor mit weitem Gesichtsfeld grob in die Bedrohungsrichtung orientiert und dann von der Nachführoptik eines ebenfalls passiven Zielverfolgungssystems mit wesentlich schmalerer Charakteristik auf den schon reibungsbedingt sich aufheizenden Dom des angreifenden schnellen Lenkflugkörpers gerichtet wird. Wegen des kleinen Durchmessers des tragbaren und typischerweise mit einem Infrarotsuchkopf ausgestatteten Flugkörpers ist die Gefahr gering, daß das Zielverfolgungssystem mit dem Abwehr-Laserstrahl den Angreifer wieder verliert, da noch auf mittlere Distanz der Durchmesser des Lenkflugkörpers deutlich kleiner ist als der Querschnitt des Abwehrstrahles.

Durch Intensitätsmodulation des Abwehrstrahles aus einer gepulsten Laserquelle oder (bei dichterer Annäherung) durch Übersteuerung wird der thermische Suchkopf-Detektor gestört bzw. geblendet und dadurch dessen Zielverfolgungs-Regelschleife außer Betrieb gesetzt. Hierfür sind vergleichsweise geringe Energiedichten im Abwehrstrahl erforderlich, wenn dessen Wellenlänge im Nutzband des Suchkopf-Detektors liegt. Größere Energiedichten, wie sie bei dichterer Annäherung auftreten, können sogar zur thermischen Zerstörung des Suchkopfes auch bei Einsatz nichtthermischer Detektoren in größerkalibrigen Lenkflugkörpern führen, insbesondere bei sehr kurzen Pulsen im Nanosekundenbereich.

Der Einsatz eines Dauerstrich- oder Pulslaser hoher Pulsrate bei vergleichsweise geringer Leistung für einen Such- und Beleuchtungsstrahl erbringt zusätzlich den Vorteil quasi-stationären Reglerverhaltens für die Ansteuerung einer adaptiven Optik aus einem Wellenfrontdetektor, um darüber auch die Fokussierung eines höherenergetischen gepulsten Strahles im spektral dicht benachbarten Wellenlängenbereich über dieselbe Spiegelplattentopographie für den Ausgleich atmosphärischer Ausbreitungsstörungen zu optimieren. Diese Kombination aus Wirk- und Hilfsstrahl ermöglicht es auch, den Wirkstrahl über eine zusätzliche Ablenkeinheit geringfügig gegenüber dem Track-Glint des Beleuchtungsstrahles zu verschwenken und so auf eine thermisch empfindlichere aber reflexärmere Stelle am Suchkopf des abzuwehrenden Flugkörpers zu richten. Dieser Punkt kann über eine als Tracksensor eingesetzte Videokamera bestimmt werden. Das Aufschalten auf das kleinflächige Ziel vor mächtigem Clutter-Hintergrund und danach das Ziel-Tracken wird gefördert, wenn die Kamera über eine Art Blenden-Verschluß (der durch die entsprechend kurzzeitige Ansteuerung eines Bildverstärkers realisierbar ist) auf den Reflexpuls vom abzuwehrenden Flugkörper aufgetastet wird, so daß die gepulste Energie des Abwehr-Laserstrahles zugleich als Stroboskopbeleuchtung für ein Hervorheben des Zielpunktes aus dem Umgebungsclutter dient.

Die erfindungsgemäße Abwehreinrichtung kann energetisch autark funktionstüchtig in einen schlanken Container eingebaut sein, der als Außenlast an dem zu schützenden Fahrzeug (etwa unter einem Luftfahrzeug) angehängt wird. Damit ist es möglich, je nach Bedarf den Container z. B. an verschiedene Flugzeuge anzuhängen.

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche stark abstrahiert skizzierten bevorzugten Realisierungs- und Einsatzbeispiels zur erfindungsgemäßen Lösung. In der Zeichnung zeigt:

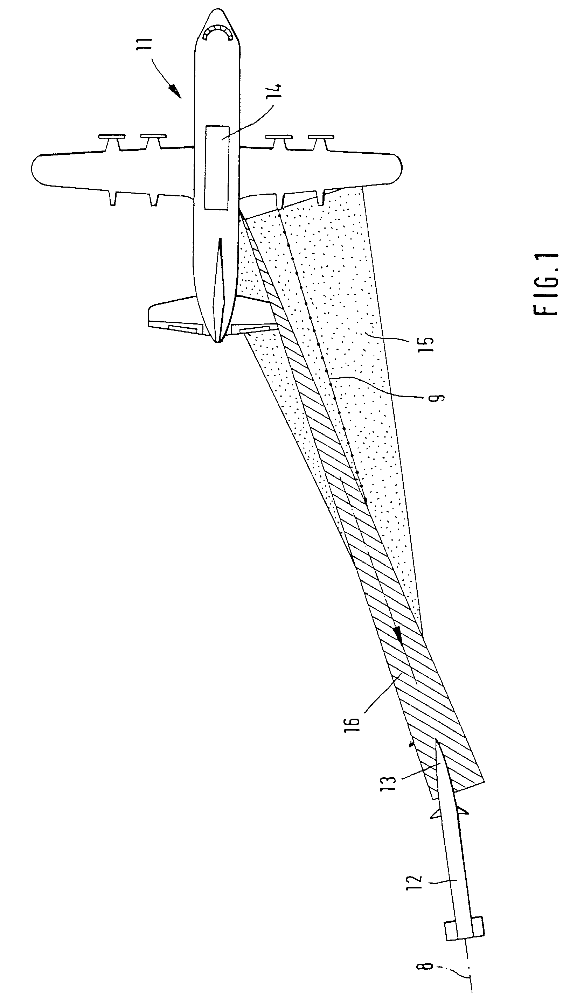

- Figur 1: ein typisches Einsatz-Szenario für die erfindungsgemäße Abwehreinrichtung, gegen in diesem Falle einen Luftziel-Flugkörper,
- Figur 2: in Prinzipdarstellung ein an ein zu schützendes Fahrzeug adaptierbares System mit einer Abwehreinrichtung für das Szenario nach Figur 1,
- Figur 3: ein Funktions-Blockschaltbild für wesentliche Komponenten im System nach Figur 2,
- Figur 4: in Prinzipdarstellung den Aufbau einer Laser-quelle zum thermischen Zerstören eines Suchkopf-Detektors oder seiner vorgeschalteten Optik im abzuwehrenden Flugkörper,
- Figur 5: ein Realisierungsbeispiel für eine breitbandige Niederleistungs-Laserquelle zum Blenden von abzuwehrenden Infrarot-Suchköpfen mit unterschiedlichen Detektor-Nutzbändern.

Ein Fahrzeug 11, etwa ein vergleichsweise langsames und vor allem wenig wendiges Linien- oder Transportflugzeug, wie es mit Hilfs- oder Betriebsgütern für humanitäre Aktionen oder für Krisenreaktionskräfte Einsatz findet, wird beispielsweise beim Start oder bei der Landung von einem tragbaren, kleinkalibrigen Lenkflugkörper 12 aus einem Hinterhalt heraus angegriffen. Der hinter einem Dom in die Spitze des Lenkflugkörpers 12 eingebaute optronische Suchkopf 13 arbeitet typisch im nahen oder ferneren Infrarotbereich des elektromagnetischen Strahlungsspektrums und hat deshalb auf ein Triebwerk des Fahrzeuges 11 aufgeschaltet. Gewöhnlich weicht (wie dargestellt) die aktuelle Flugrichtung 8 des Angreifers, bis auf die letzte Phase der Annäherung, noch von der tatsächlichen Zielrichtung 9 ab. Der also etwa längs einer Schleppkurve oder längs einer vorverlegten Schleppkurve angreifende Lenkflugkörper 12 würde etwaigen Ausweichmanövern des Luftfahrzeuges 11 (außer vielleicht in der allerletzten Angriffsphase) ohne weiteres folgen können, zumal insbesondere während des Starts und der Landung nur höchst beschränkte Ausweichmanöver möglich sind. Die Wirkung von aus dem Luftfahrzeug 11 abgeworfenen Heißlichtquellen (Flares) auf den Suchkopf 13 des Angreifers versagt insbesondere bei schon zu dichter Annäherung und auch dann, wenn im verfolgenden (oder frontal angreifenden) Lenkflugkörper 11 auch eine Szenenauswertung erfolgt, um den einmal aufgefaßten eigentlichen Zielumriß (also das gefährdete Fahrzeug 11) als Schatten vor dem Hintergrund nicht wieder aus dem Angriffskontakt zu verlieren. Deshalb hat das Fahrzeug 11 gewöhnlich keine Überlebenschance gegen den angreifenden Lenkflugkörper 12.

Wenn dagegen das potentiell gefährdete Fahrzeug 11 mit einer Abwehreinrichtung 14 gemäß vorliegender Erfindung ausgestattet ist, dann wird der Suchkopf 13, dessen Gesichtsfeld 15 das Fahrzeug 11 und damit seine Abwehreinrichtung 14 erfaßt hat, von einem Abwehr-Laserstrahl 16 ins Visier genommen. Das hat zur Folge, daß der Infrarot-Detektor im Suchkopf 13 des Angreifer zunächst mit der störenden Taktfrequenz eines gepulsten Abwehrstrahles 10 beaufschlagt und dadurch in seiner Funktion gestört, bei dichterer Annäherung auch übersteuert und in noch größerer Energiekonzentration sogar thermisch zerstört, also der Suchkopf 13 gewissermaßen schon bald geblendet und jedenfalls außer Funktion gesetzt wird. Dadurch ist auch die Zielaufschaltung des angreifenden Lenkflugkörpers 12 gestört, so daß dieser mit großer Wahrscheinlichkeit sein Ziel verfehlt, weil er abweichend von der momentanen Zielrichtung 9 seine aktuelle Flugrichtung 8 beibehält oder aber weil er abstürzt, da die Ruderansteuerung in einen Endanschlag driftet. Jedenfalls kann nach Ausfall der Lenkschleife im angreifenden Flugkörper 12 die gegebene Abweichung zwischen Flugrichtung und Zielrichtung 8-9 nicht mehr ausgeregelt werden.

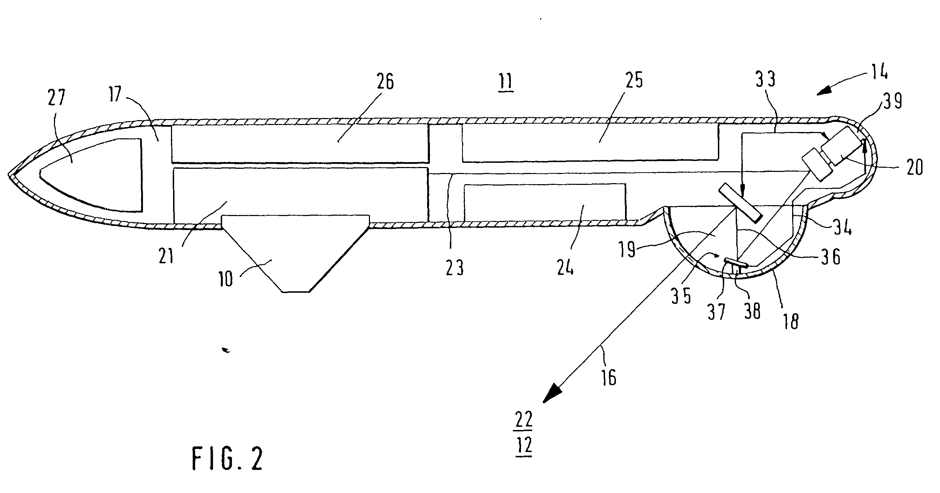

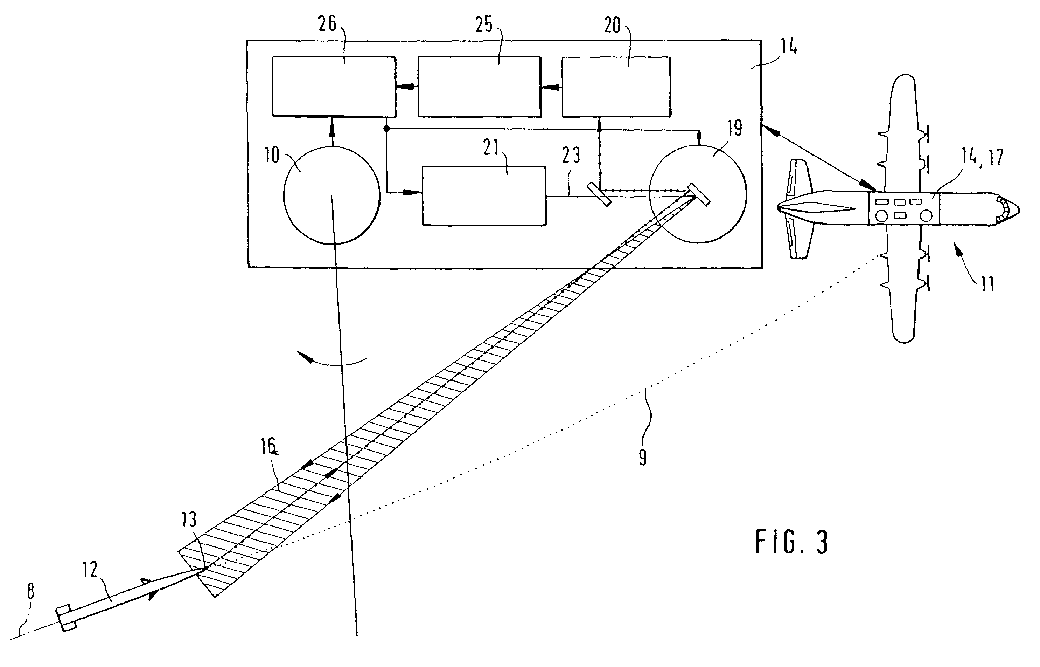

Um in ungesichertem Gebiet einzusetzende Fahrzeuge 11 rasch und technisch unproblematisch gegen die Bedrohung durch Lenkflugkörper 12 schützen zu können, ist die erfindungsgemäße Abwehr-Einrichtung 14 zweckmäßigerweise als autark funktionstüchtiges System, für Luftfahrzeuge 11 z. B. in einen strömungsgünstig geformten schlanken Container 17 integriert, aufgebaut, das z. B. wie eine Außenbord-Last unter dem Rumpf oder unter einem Flügel eines Luftfahrzeuges 11 eingeklinkt werden kann. Dieser Container 17 ist hinter einem strahlentransparenten Dom 18 (Figur 2) mit einer Nachführoptik 19 (die wie skizziert ein Kippspiegelsystem aufweisen kann) ausgestattet, die gleichzeitig in den Strahlengängen sowohl eines Zielverfolgungssystems 20 wie auch einer Laserquelle 21 liegt (Fig.3). Beim Zielverfolgungssystem 20 kann es sich um eine Korrelationsschaltung handeln, wie sie etwa in der DE-OS 34 02 190 beschrieben ist. Es genügt aber durchaus schon eine einfache Track-Infrarotkamera, die vom Warnsensor 10 in Richtung 22 auf den sich annähernden Flugkörper 12 orientiert wird, der sich durch besonders heiße Regionen - etwa an den Flügelspitzen und vor allem vor dem Dom seines Suchkopfs 13 - seiner Umgebung gegenüber signifikant abhebt.

Da das Zielverfolgungssystem 20 zum möglichst genauen Einhalten der Abwehr-Richtung 22 mit einer schmalen Charakteristik seines Abwehrstrahles 16 arbeitet, ist die Abwehr-einrichtung 14 zweckmäßigerweise zusätzlich mit einem Warnsensor 10 ausgestattet, bei dem es sich um ein handelsübliches Raketenwarnsystem zum Absuchen des Halbraumes unter dem Luftfahrzeug 11 handeln kann. Wenn dieses Warnsystem im Infrarotspektrum arbeitet, wird von ihm eventuell schon die intensivere Infrarotstrahlung erfaßt, die beim Start des angreifenden Flugkörpers 12 entsteht. Jedenfalls weist der mit breitem Gesichtsfeld rundum suchende Warnsensor 10 bei Zielauffassung das Zielverfolgungssystem 20 grob auf die Bedrohungsrichtung 22 ein. Aufeinanderfolgende Wärmebilder des dann erfaßten Flugkörpers 12 können noch daraufhin ausgewertet werden, ob es sich um ein in Bewegung befindliches Echtziel handelt, und insbesondere um eine Bedrohung des Fahrzeuges 11, während die Optik 19 für die Zielverfolgung und für den Abwehrstrahl 16 stets der aktuellen Richtung 22 zum Flugkörper 12 nachgerichtet bleibt.

In diese Nachführoptik 19 wird also auch der aus der Laser-quelle 21 ausgekoppelte Laserstrahl 23 eingespeist, der dann als Abwehrstrahl 16 direkt auf den angreifenden Flugkörper 12 und damit auf dessen Suchkopf 13 trifft und diesen stört, bei hinreichender Annäherung auch durch Übersteuerung blendet und schließlich vielleicht sogar thermisch zerstört.

Außer dem Zielverfolgungssystem 20 (mit der Nachführoptik 19) und der Laser-Quelle 21 sind in dem Container 17 deren autarken oder aus dem Bordnetz des Trägers gespeisten Stromversorgungen 24, die Track-Elektronik 25 und eine Feuerleitung 26 zum Aktivieren der Quelle 21 nach Aufschalten des Zielverfolgungssystemes 20 enthalten, sowie gegebenenfalls eine ECM-Einrichtung 27 zum funktechnischen Stören gegnerischer Fernsteuerungen bei radargeführtem Flugkörper 12.

Um bei stirnseitigem Dom-Einbau gleicherweise frontal und rückwärtig verfolgend angreifende Flugkörper 12 blenden zu können, kann ein Fahrzeug 11 mit zwei solchen Containern 17 in gegensinniger Orientierung ausgestattet werden; oder ein Container 17 ist mit einem gemäß Figur 2 halbkugelförmig vorragenden Dom 18 ausgestattet, der praktisch den gesamten Halbraum z. B. unter einem zu schützenden Luftfahrzeug 11 durch das Zielverfolgungssystem 20 erfassen läßt.

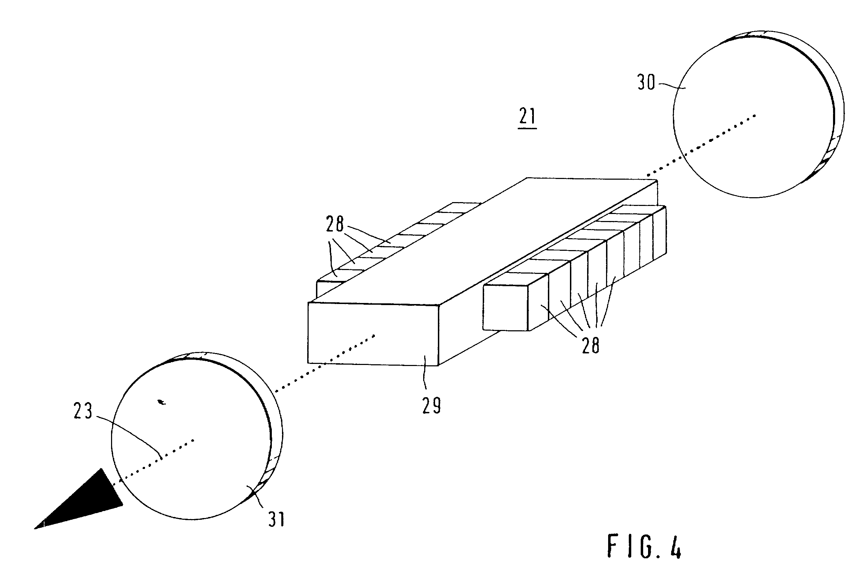

Der Einsatz einer etwa in der Zeitschrift OLE (Januar 1993, Seiten 18/19) näher beschriebenen Feststoff-Laserquelle 21 mit Halbleiter-Pumpdioden 28 (Figur 4) liefert genügend Energie zum thermischen Zerstören des Detektors in einem gegnerischen Suchkopf 13. In der Prinzipdarstellung eines Aufbaues für eine solche Laser-Quelle 21 sind die Kühlplatten fortgelassen, die den Laserstab 29 zur Verlustwärme-Abfuhr einfassen und erforderlichenfalls Kühlmittel-Kanäle enthalten. Vorzugsweise handelt es sich vor dem Resonator-Spiegel 30 um einen Neodym-YAG-Stab 29, der von zwei einander gegenüberliegenden Längsseiten her mittels eines Arrays von Halbleiter-Dioden 28 gepumpt wird. Durch den halbtransparenten Auskoppelspiegel 31 hindurch wird ein Laserstrahl 23 derart gut fokussiert ausgegeben, daß im Impulsbetrieb schon auf einige 100 m Distanz zum anfliegenden Flugkörper 12 bereits ausreichende Blendleistung im Abwehr-strahl 16 verfügbar ist.

Zweckmäßig ist eine Frequenzverschiebung in das typische Arbeitsband eines Infrarot-Suchkopfes 13, um schon auf größere Distanz die Stör- und Blendwirkung zu erhöhen. Dazu kann ein nichtlinearer Kristall oder ein optischer parametrischer Verstärker etwa zwischen der Laserquelle 21 und der Nachführoptik 19 des Zielverfolgungssystems 20 Einsatz finden. Speziell der Einsatz eines OPOs erlaubt das Durchstimmen der Laserwellenlänge, wodurch der Schutz des Suchkopfes durch Spektral-Filter unmöglich gemacht wird. Die Taktfrequenz bei gepulster Laserquelle 21 entspricht der üblichen Retikel-Frequenz in einem Infrarot-Suchkopf 13, oder sie wird über einen typischen Frequenzbereich durchgestimmt. Dadurch wird schon die Signalverarbeitung hinter dem thermischen Detektor im Suchkopf 13 gestört, noch ehe bei größerer Annäherung die Energiedichte im Abwehrstrahl 16 zur Übersteuerung und schließlich eventuell sogar zur thermischen Zerstörung des Detektors im angreifenden Suchkopf 13 führt.

In Fig. 2 ist (gegenüber Fig. 3) zusätzlich berücksichtigt, daß es zweckmäßig ist, neben dem tracking-Regelkreis 33 für die Zielverfolgung zum angreifenden Flugkörper 12 beim Zielverfolgungssystem 20 einen separaten Antivibrations-Regelkreis 34 vorzusehen, um die höherfrequenten mechanischen Vibrationen des Fahrzeuges 11 auszuregeln, denen das Zielverfolgungssystem 20 kaum folgen kann. Dazu ist der Antivibrations-Regelkreis 34 mit einer Optik 35 versehen, die im Strahlengang 36 der Nachführoptik 19 unabhängig von dieser einstellbar ist. Der Vibrations-Kippspiegel 37 besitzt im Vergleich zu demjenigen der Nachführoptik 19 eine kleine Masse und somit eine kleine Massenträgheit. Er ist zweckmäßigerweise mittels schneller Piezoaktuatoren 38 verstellbar, um mit entsprechend kleiner Regelzeitkonstante die Vibrationen des Fahrzeuges 11 im Abwehrstrahl 16 auszugleichen, die aktuell von einem Beschleunigungsmesser 39 oder einem anderen Sensor an der Struktur des Fahrzeugs 11 bzw. seines Abwehr-Kontainers 17 aufgenommen werden.

Dieser - oder ein weiterer im Nachführ-Strahlengang 36 gelegener - schneller Kippspiegel 37 kann auch dazu angesteuert werden, auf die Ausbreitung des Abwehr-Strahles 16 sich auswirkende atmosphärische Störungen erster Ordnung mit minimalem Aufwand an Gerät und Ansteuerungselektronik weitestgehend zu kompensieren. Denn ein Großteil aller auf die Strahlparameter sich auswirkender Fehlereinflüsse rühren aus Umgebungs-Turbulenzen her, die zu einer ungewünschten Strahlauffächerung führen, was aber durch eine Spiegel-Verschwenkung um zwei orthogonale Achsen mittels schneller Aktuatoren (wie Piezosäulen-Linearstellgliedern) hinreichend kompensiert werden kann. Eine solche Stabilisierung des Abwehr-Strahles 16 hat zur Folge, daß dieser leichter auf den abzuwehrenden Flugkörper 12 ausgerichtet gehalten werden kann; und die höhere Energiedichte führt ohne zusätzlichen Geräteaufwand seitens der Strahlerzeugung zu einer wesentlichen Reichweitensteigerung hinsichtlich der Stör- und Zerstörungswirkung im abzuwehrenden Flugkörper 12. Deshalb ist diese Abwehr-Einrichtung 14 dann unmittelbar auch auf Seefahrzeugen gegen Seeziel-Flugkörper 12 einsetzbar, die wegen geringer Manövrierbarkeit und guter Ortbarkeit eine wesentlich größere Abwehrdistanz benötigen, als Luft- oder Landfahrzeuge.

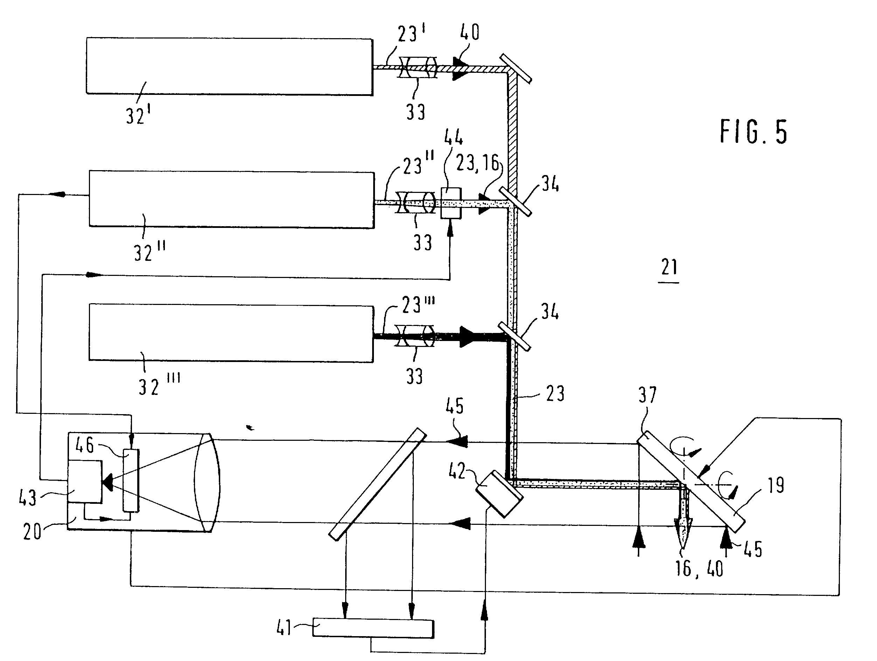

Ein Beispiel für eine breitbandige Laserquelle 21 geringerer, aber für den Blendeffekt durch Übersteuerung durchaus ausreichender Leistung zeigt Figur 5. Um alle Arbeitsbänder typischer Infrarot-Suchköpfe 13 abzudecken, sind die Laserstrahlen 23', 23'' und 23''' eines frequenzverdoppelten CO-2-Resonators 32' und eines Ho:YAG-Resonators 32'' für Detektorbeeinflussung in den typischen Nutzbändern sowie eines frequenzverdreifachten Nd:YAG-Resonators 32''' gegen Ultraviolettstrahlung auswertende Suchköpfe 13 wie skizziert über strahlaufweitende Teleskope 33 und Strahlteiler 34 sowie den gemeinsamen Kippspiegel der Nachführoptik 19 zum ausgesandten Abwehrstrahl 16 kombiniert. Zur Optimierung der Strahlleistung über dem Querschnitt, also für eine Fokussierung des Abwehrstrahles 16 im abzuwehrenden Flugkörper 12, kann vor dem Kippspiegel der Nachführoptik 19 zusätzlich eine adaptive Optik oben erwähnter Art Einsatz finden.

Die Kombinations-Laserquelle 21 gemäß Fig. 5 kann auch dahingehend abgewandelt oder weitergebildet werden, daß sie außer wenigstens einem Resonator 32'' zum Generieren des eigentlichen gepulsten Abwehr-Laserstrahles 16 einen Resonator 32' für einen gesonderten Beleuchtungs-Strahl 40 von ggf. niedrigerer Leistung im Dauerstrichbetrieb aufweist. Der wird mittels einer über einen Wellenfront-Detektor 41 lokal unterschiedlich angesteuerten mehrkanaligen adaptiven Optik 42, wie etwa in der DE-PS 34 22 232 in Verbindung etwa mit DE-PS 40 07 321 näher beschrieben, unter Kompensation von im Ausbreitungsweg auftretenden atmosphärischen Störungen auf einen gut reflektierenden Punkt am Suchkopf 13 des abzuwehrenden Flugkörpers 12 fokussiert. Bei dem Glint-Punkt kann es sich um das Zentrum der Suchkopf-Optik selbst, oder auch um eine diese einfassende Optik-Halterung handeln, die aufgrund ihres gut wärmeleitenden Einbaus in die Trägerstruktur nicht leicht durch die thermische Energie eines Laserstrahles zu beschädigen oder gar zu zerstören ist. Über eine Kamera 43, bei der es sich um die als Track-Sensor dienende Bildkamera selbst handeln kann, wird visuell oder unter Einsatz automatischer Bildverarbeitungs- und Klassifikationsverfahren ein typischer sensibler Punkt in der Suchkopf-Optik des abzuwehrenden Flugkörpers 12 abseits des Reflexions-Glints, auf den der Beleuchtungs-Strahl 40 trackt, bestimmt und der Resonator 32'' für den Abwehr-Strahl 16 über einen Kippspiegel oder dergleichen Strahlablenker 44 winkelmäßig geringfügig gegenüber der Abgangsrichtung des Beleuchtungs-Strahles 40 versetzt, so daß vom Abwehr-Strahl 16 ein strahlungsempfindlicherer Punkt des auszuschaltenden Suchkopfes 13 beaufschlagt wird. Das erfolgt nun ebenfalls mit der aktuell optimierten Fokussierung über die adaptive Optik 42, wenn die Wellenlänge des höherenergetischen Abwehr-Strahles 16 sich nicht zu sehr unterscheidet von der Wellenlänge des Beleuchtungs-Strahles 40 für die Zielpunkt-Auswahl und Optik-Adaption. So ergibt die Spiegelplatten-Topographie der adaptiven Optik 42 für die beiden spektral einander relativ dicht benachbarten Strahlfrequenzen praktisch gleiche Fokussieroptimierung im Ziel, weil die für den Hilfsstrahl aktuell eingestellte Korrekturmaßnahme auch für den Leistungsstrahl 16 praktisch gleicher Frequenz zutrifft, der wegen nur geringfügiger winkelmäßiger Abweichung auf dem Ausbreitungswege praktisch dieselben atmosphärischen Verhältnisse wie der Beleuchtungs-Strahl 40 vorfindet. Zweckmäßigerweise ist das Empfindlichkeitsmaximum der Kamera 43 nicht nur gegenüber der spektralen Wellenläge des Wirk-Laserstrahles 16, sondern auch gegenüber derjenigen des Beleuchtungs-Laserstrahles 40 beispielsweise über selektive Filterung versetzt, so daß weder vom Hilfs-Glint noch von der Reflexion des Wirkmechanismus im Ziel eine Übersteuerung und damit Auslöschung des Kamerabildes durch die Reflexionsenergie 45 erfolgt.

Wegen der Instabilität der die Strahl-Divergenz und -Wellenfront beeinflussenden atmosphärischen Verhältnisse ist deren Kompensation in der Fokusebene des Abwehr-Strahles 16 auf dem abzuwehrenden Flugkörper 12 praktisch nur über eine kontinuierlich vom Wellenfront-Detektor 41 auf die adaptive Optik 42 arbeitende Steuerung möglich, denn ein Pulsbetrieb des Abwehr-Strahles 16 würde bei vertretbarem regelungstechnischem Aufwand zu kurze Betriebszeiten für stationäre Kompensation von Änderungen in den atmosphärischen Verhältnissen erbringen. Andererseits ist ein Dauerstrich-Leistungsresonator 32'' apparativ und betriebstechnisch sehr aufwendig. Bei der zuvor diskutierten Lösung einer überlagerten Laser-Quelle 21 jedoch genügt es für stabile Arbeitsweise der adaptiven Optik 42, den vergleichsweise niederenergetischen Beleuchtungs-Strahl 40 kontinuierlich zu erzeugen und dadurch stabiles Einschwingverhalten des Regelkreises über die adaptive Optik 42 sicherzustellen. Diesem quasi-stationären Betrieb kann dann ein gepulster Leistungs-Strahl 16 aus einem preisgünstiger einsetzbaren Impuls-Resonator 32'' überlagert werden. So ist mit einer herkömmlichen adaptiven Optik 42, die über den CW-Beleuchtungsstrahl 40 eingestellt wird, der fokusoptimierte Betrieb eines gepulsten Leistungsstrahles 16 realisierbar.

Problematisch kann allerdings das Aufschalten eines Beleuchtungs- oder Abwehr-Strahles 40/16 auf den abzuwehrenden Flugkörper 12 sein, der mit einem typischen Durchmesser von weniger als 10 cm in einer Entfernung von mehreren Kilometern zuverlässig erfaßt und für die Strahl-Nachführung gehalten werden muß. Eine solche unklare und fast nur punktförmige Signatur ist insbesondere vor dem Untergrund-Clutter von einem Luftfahrzeug 11 her schlecht auszumachen. Um eine Zielaufschaltung zu fördern und danach einem Zielverlust vorzubeugen, kann (wie in Fig. 5 berücksichtigt) innerhalb des Zielverfolgungssystemes 20 vor der Wärmebild-Kamera 43 ein elektromechanischer oder elektrooptisches Verschluß 46 vorgesehen sein, mittels dessen die Kamera 43 auf die pulsierende Reflex-Energie 45 vom gepulsten Abwehr-Strahl 16 aufgetastet wird. Über dessen Resonator 32'' wird die Kamera erst freigegeben, wenn der ausgesendete Abwehrpuls-Strahl 16 beendet ist, und sobald die Reflex-Energie 45 aufgenommen wurde, wird der Verschluß 46 wieder geschlossen. Wegen der hohen Lichtgeschwindigkeit wird die Kamera 43 so nur wenige Mikrosekunden beleuchtet, und in dieser Zeitspanne nimmt sie die volle Zielreflexleistung vom abzuwehrenden Flugkörper 12 auf. Wegen der kurzen Verschluß-Öffnungszeit tritt auch bei sehr hoher Relativgeschwindigkeit zwischen abzuwehrendem Flugkörper 12 und zu schützendem Fahrzeug 11 keine Belichtungsunschärfe auf, und das Zielbild ist frei von Clutterleistung, also frei von informationsloser Umgebungsstrahlung. Der Hintergrund des nur punktförmigen Zieles wird also unterdrückt, indem dessen pulsierende Reflexstrahlung gewissermaßen zugleich als stroboskopische Beleuchtung für eine Zielbilddarstellung ausgenutzt wird, um den Clutter aus dem Zielbild auszublenden und dadurch den Trackvorgang des Abwehr-Strahles 16 auf den zu störenden Suchkopf 13 zu stabilisieren.

## Patentansprüche

1. Einrichtung (14) zur Abwehr eines ein Fahrzeug (11) angreifenden Flugkörpers (12) mit thermisch-optronischem Suchkopf (13) zur Zielverfolgung, wobei das Fahrzeug (11) mit einer Laserquelle (21) ausgestattet ist, deren Laserstrahl (23) über die Nachführoptik (19) eines Zielverfolgungssystemes (20) als Abwehrstrahl (16) auf den anfliegenden Flugkörper (12) ausrichtbar ist, um dessen Suchkopf (13) außer Angriffs-Funktion zu setzten,
**dadurch gekennzeichnet,**
daß neben dem Abwehrstrahl (16), mittels dessen je nach der Annäherungssituation der Flugkörper-Suchkopf (13) durch Störung, durch Übersteuerung oder durch Zerstörung außer Funktion setzbar ist, ein Beleuchtungsstrahl (40) in zum Abwehr-strahl (16) spektral dicht benachbarter Wellenlänge vorgesehen ist.

2. Einrichtung nach Anspruch 1,
**dadurch gekennzeichnet,**
daß die Laserquelle (21) einen Strahl (23) als Abwehrstrahl (16) liefert, in dem Schwingungskomponenten in den typischen Arbeitsbändern von Infrarot-Detektoren im nahen und/oder Fernen IR-Spektrum sowie ggf. auch im UV-Spektralband oder im VIS-Band einander überlagert sind.

3. Einrichtung nach Anspruch 1 oder 2,
**dadurch gekennzeichnet,**
daß der Abwehrstrahl (16) über einen um orthogonale Achsen verschwenkbaren Kippspiegel (37) zur Kompensation von Ausbreitungs-Turbulenzstörungen erster Ordnung stabilisiert ist.

4. Einrichtung nach einem der vorangehenden Ansprüche,
**dadurch gekennzeichnet,**
daß der Abwehrstrahl (16) zusätzlich zu einer Zielverfolgungsregelkreis (33 ) eine Entkopplung von Struktur-Vibrationen über einen schnelleren Kippspiegel-Regelkreis erfahrt, der von einem Sensor (39) geführt ist.

5. Einrichtung nach einem der vorangehenden Ansprüche,
**dadurch gekennzeichnet,**
daß der Abwehrstrahl (16) und der Beleuchtungsstrahl (40) winkelmäßig geringfügig gegeneinander versetzt ist aber in der Fokussierung auf dein abzuwehrenden Flugkörper (12) eine gemeinsame Kompensation atmosphärische Ausbreitungsstörungen über die lokal unterschiedliche Topographie des Spiegels einer adaptiven Optik (42) erfahren, die über einen Wellenfrontdetektor (41) ausgesteuert ist.

6. Einrichtung nach einem der vorangehenden Ansprüche,
**dadurch gekennzeichnet,**
daß der Abwehrstrahl (16) über einen Ablenker (44) geringfügig winkelmäßig gegenüber dem spektral dicht benachbarten Beleuchtungsstrahl (40) verschwenkt auf das optische Zentrum des gegnerischen Suchkopfes (13) ausgerichtet ist.

7. Einrichtung nach Anspruch 6,
**dadurch gekennzeichnet,**
daß der Beleuchtungsstrahl (40) auf einen optiknahen Glint des abzuwehrenden Flugkörpers (11) trackt.

8. Einrichtung nach einem der vorangehenden Ansprüche,
**dadurch gekennzeichnet,**
daß als Track-Sensor für das Zielverfolgungssystem (20) eine Kamera (43) vorgesehen ist, die über einen kurzzeitig aufsteuerbaren Verschluß (46) auf pulsförmige Reflex-Energie (45) eines gepulsten Abwehrstrahles (16) aufgetastet ist.

9. Einrichtung nach einem der vorangehenden Ansprüche,
**dadurch gekennzeichnet,**
daß sie mit einem Warnsensor (10) mit breitem Gesichtsfeld zur Suche nach einem potentiellen Angreifer ausgestattet ist, der das Zielverfolgungssystem (20) mit seinem dagegen schmalen Gesichtsfeld sowie dein gebündelten Abwehrstrahl (16) auf eine aktuell erkannte Bedrohung (22) ausrichtet und in Funktion setzt.

10. Einrichtung nach einem der vorangehenden Ansprüche,
**dadurch gekennzeichnet,**
daß der Abwehrstrahl (16) im Takt einer typischen Suchkopf-Retikelfrequenz oder aber variabel gepulst ist.

## Claims

1. Device (14) for warding off a missile (12) attacking an aircraft (11) with a thermal optronic seeker head (13) for tracking the target, the aircraft (11) being equipped with a laser source (21) whose laser beam (23) can be directed as a defensive beam (16) at the approaching missile (12) by way of the tracking optics (19) of a target-tracking system (20) so as inactivate the attack function of the missile's seeker head (13),
**characterized in that,**
in addition to the defensive beam (16) by means of which the missile's seeker head (13) can be inactivated by jamming, overriding or destruction depending on the approach situation, an illuminating beam (40) is provided in a wavelength which is spectrally closely contiguous with the defensive beam (16).

2. Device according to Claim 1,
**characterized in that**
the laser source (21) delivers a beam (23) as a defensive beam (16) in which vibrational components in the typical working bands of infrared detectors in the near and/or far IR spectrum as well as possibly also in the UV spectral band or in the visible band are superimposed on one another.

3. Device according to Claim 1 or 2,
**characterized in that**
the defensive beam (16) is stabilized by way of an oscillating mirror (37) which swivels around orthogonal axes to compensate for propagation disturbance of turbulence of the first order.

4. Device according to one of the preceding claims,
**characterized in that,**
in addition to a target-tracking control circuit (33), the defensive beam (16) undergoes a balancing out of structural vibrations by way of a faster oscillating mirror control circuit which is controlled by a sensor (39).

5. Device according to one of the preceding claims,
**characterized in that**
the defensive beam (16) and the illuminating beam (40) are slightly offset at an angle to one another but in focussing on the missile (12) to be repulsed undergo a joint compensation for atmospheric propagation disturbance by way of the locally varying topography of the mirror of an adaptive optical system (42) which is controlled by way of a wave-front detector (41).

6. Device according to one of the preceding claims,
**characterized in that**
the defensive beam (16) is directed at the optical centre of the enemy seeker head (13) by way of a deflector (44) swivelled slightly at an angle to the spectrally closely contiguous illuminating beam (40).

7. Device according to Claim 6,
**characterized in that**
the illuminating beam (40) tracks on an optically close glint of the missile (11) to be repulsed.

8. Device according to one of the preceding claims,
**characterized in that**
a camera (43) is provided as a track sensor for the target-tracking system (20), this camera (43) being keyed to pulse-shaped reflected energy (45) of a pulsed defensive beam (16) by way of a momentarily controllable shutter (46).

9. Device according to one of the preceding claims,
**characterized in that**
it is equipped with a warning sensor (10) with a wide field of vision for seeking a potential attacker, which directs the target-tracking system (20) with its relatively narrow field of vision as well as the focussed defensive beam (16) at an actually identified threat (22) and activates it.

10. Device according to one of the preceding claims,
**characterized in that**
the defensive beam (16) is pulsed in the rhythm of a standard seeker head reticle frequency or else is pulsed variably.

## Revendications

1. Dispositif (14) de défense contre un missile (12) qui attaque un véhicule (11) et qui comporte une tête chercheuse (13) thermo-optronique pour la poursuite d'un objectif, le véhicule (11) étant équipé d'une source laser (21) dont le rayon laser (23) peut être orienté, par l'intermédiaire de l'optique de poursuite (19) d'un système de poursuite de cible (20), en tant que rayon de défense (16), sur le missile (12) arrivant, afin de mettre sa tête chercheuse hors fonction d'attaque, caractérisé en ce qu'il est prévu, outre le rayon de défense (16), au moyen duquel, suivant la situation d'approche, la tête chercheuse (13) du missile peut être mise hors fonction par dérangement, par saturation ou par destruction, un rayon d'éclairage (40) dans la longueur d'ondes spectralement très proche du rayon de défense (16).

2. Dispositif selon la revendication 1, caractérisé en ce que la source laser (21) fournit un rayon (23) servant de rayon de défense (16), dans lequel des composantes d'oscillation sont superposées les unes aux autres dans les bandes de travail caractéristiques des détecteurs à infrarouge dans le spectre IR proche et/ou lointain ainsi qu'éventuellement dans la bande spectrale UV ou dans la bande VIS.

3. Dispositif selon la revendication 1 ou 2, caractérisé en ce que le rayon de défense (16) est stabilisé par un miroir basculant (37), pouvant pivoter autour d'axes orthogonaux, pour la compensation de perturbations par turbulences de propagation de premier ordre.

4. Dispositif selon l'une des revendications précédentes, caractérisé en ce que le rayon de défense (16), en supplément à un circuit (33) de régulation de poursuite de cible, subit un découplage par rapport aux vibrations de la structure, grâce à un circuit de régulation à miroir basculant plus rapide, qui est guidé par un capteur (39).

5. Dispositif selon l'une des revendications précédentes, caractérisé en ce que le rayon de défense (16) et le rayon d'éclairage (40) sont légèrement décalés angulairement l'un par rapport à l'autre, mais subissent, dans la focalisation sur le missile (12) à repousser, une compensation commune des perturbations atmosphériques à la propagation, grâce à la topographie localement différente du miroir d'une optique (42) d'adaptation, qui est commandée par un détecteur de front d'ondes (41).

6. Dispositif selon l'une des revendications précédentes, caractérisé en ce que le rayon de défense (16) est légèrement dévié angulairement par l'intermédiaire d'un déviateur (44), par rapport au rayon d'éclairage (40) très voisin spectralement, et est orienté sur le centre optique de la tête chercheuse (13) adverse.

7. Dispositif selon la revendication 6, caractérisé en ce que le rayon d'éclairage (40) suit une lueur, proche dy système optique du missile (11) à détourner.

8. Dispositif selon l'une des revendications précédentes, caractérisé en ce qu'il est prévu comme capteur de poursuite pour le système de poursuite de cible (20), une caméra (43) qui est déclenchée, grâce à un obturateur (46) commandable pendant une courte durée, en réponse à une énergie pulsée réfléchie (45) d'un rayon de défense (6) pulsé.

9. Dispositif selon l'une des revendications précédentes, caractérisé en ce qu'il est équipé d'un capteur d'avertissement (10) à large champ visuel pour la recherche d'un attaquant potentiel, qui oriente le système de poursuite de cible (20) à champ visuel relativement étroit, ainsi que le rayon de défense (16) resserré, sur une menace (22) détectée à l'instant et le met en fonction.

10. Dispositif selon l'une des revendications précédentes, caractérisé en ce que le rayon de défense (16) est pulsé au rythme d'une fréquence caractéristique d'un obturateur à ouvertures de la tête chercheuse ou encore de manière variable.
